# EUROPEAN PATENT APPLICATION

(11) **EP 1 164 445 A2**
(43) Date of publication of application: **19.12.2001**
(21) Application number: 01304562.0
(22) Date of filing: 23.04.2001
(51) Int. Cl.: G04C 10/04

(54) **Electric power supply device and portable information device**

(30) Priority: 24.05.2000 JP 2000152624; 09.04.2001 JP 2001110382
(71) Applicant: Seiko Instruments Information Devices Inc., Chiba-shi, Chiba (JP)
(72) Inventor: Odagiri, Hiroshi, c/o Seiko Instruments Inc, Chiba-shi, Chiba (JP)
(74) Representative: Sturt, Clifford Mark

(57) **Abstract**

The electric power supply device is incorporated in a wristwatch-type communication device having functions corresponding to those of the a watch and a portable telephone and has a power supply section constituted of a lithium-ion battery, a control section for controlling the operation of the entire device, a time measuring section having a clock function, a communication section having a telephone function, a first voltage detection section for detecting a drop in a voltage supplied from the power supply section below the voltage at which the communication section can operate, and a power supply shutoff section for stopping supply of electric power to the communication section by breaking the connection to the power supply section when a voltage drop below the predetermined level is detected by the first voltage detection section.

## Description

The present invention relates to an electric power supply device for supplying electric power to a time measuring device for measuring the current time and to a communication device capable of transmitting and receiving speech data, etc., to and from other communication devices, etc., and also relates to a portable information device.

In recent years, people have had increasing needs for transmitting/receiving speech information, text information, image information, etc., while one is moving or where one is at one's destination. To meet such needs, a miniaturization and a weight reduction of devices having the information communication function through radio wave and a telephone line such as portable telephones and small computers commonly called "mobiles" are being positively promoted.

Conversely, certain kinds of devices originally small in size and weight have been designed to be multifunctional and to have an information communication function corresponding to that of portable telephones while taking advantage of their characteristics. For example, devices called "wristwatch-type communication device", "wristband-type telephone communication device", and the like, substantially similar in external appearance to conventional wristwatches and having a telephone communication function as well as a clock function (See, for example, Japanese Patent Publication Laid-open No. Hei 11-177663).

Such wristwatch-type communication devices are extremely small in overall size and necessarily use a power supply constituted of a small-capacity lithium-ion battery or the like which supplies electric power to the devices concerned, and have disadvantageously shorter continuous-talk and standby times in comparison with larger communication devices such as conventional portable telephones. To compensate for this drawback, various means have been devised to efficiently use restricted electric power in the telephone-equivalent section (communication section) that consumes particularly large electric power in the communication devices.

A proposition relating to selective use of functions has also been made for a purpose different from the purpose of effectively using electric power (See, for example, Japanese Patent Publication Laid-open No. Hei 11-308163). This application relates to selective use of functions which a portable telephone terminal has, but the art in this application could be applicable in some cases as a means for efficiently using electric power. For example, the operation of the communication function may be positively stopped to limit wasteful electric power consumption when the terminal is out of a communication function service area.

In the conventional art, however, a small amount of electric power still remains in a battery even after the battery has been exhausted to reduce its voltage below a level so low as to make it impossible to obtain the necessary voltage for driving the communication section. However, when a clock-equivalent section (time-measuring section) is capable of operating properly even at such a reduced voltage, the electric power supply to all the functional sections of the device is stopped.

That is, in the conventional art, while electric power is used without being wasted as long as a certain voltage is obtained, no consideration is given to an effective use of the remaining battery power after it has become impossible to obtain the desired voltage. As a result, the drive time of the device as a whole is improperly reduced. Portable information devices also have the same problem as that described above regarding the drive time of the device as a whole is unnecessarily reduced.

An object of the present invention is to provide an electric power supply device designed to solve the above-described problem of the conventional art and capable of efficiently using remaining small electric power and extending the drive time of a connected device as a whole.

Another object of the present invention is to provide a portable information device capable of efficiently using remaining small electric power and extending the drive time of the connected potable information device as a whole.

To solve the above-described problem and to achieve the above-described objects, according to the present invention, there is provided an electric power supply device for supplying electric power to a time measuring device for measuring the current time, etc., and to a communication device for transmitting and receiving speech data, etc., to and from another communication device or the like, the electric power supply device comprising voltage detection means for detecting a drop below a predetermined value in the voltage applied to the time measuring device and the communication device, power supply stop means for stopping supply of electric power to the communication device when a drop below the predetermined value in the voltage applied to the time measuring device and the communication device is detected by the voltage detection means, and display means for displaying on a display the current time, etc., measured by the time measuring device and information that the communication device has become unable to operate when a drop below the predetermined value in the voltage applied to the time measuring device and the communication device is detected by the voltage detection means.

According to the present invention, when the voltage of the power supply drops due to exhaustion of a battery or the like, only supply of electric power to the communication device having a larger electric power consumption is stopped and remaining electric power is supplied to and consumed by the time measuring device having a smaller electric power consumption.

The electric power supply device of the present invention described above also comprises second voltage detection means for detecting a drop below another predetermined value in the voltage applied to the time measuring device and the communication device, and the display means displays on the display the current time, etc., measured by the time measuring device and information that the communication device is unable to operate when a drop below each of the predetermined values in the voltage applied to the time measuring device and the communication device is detected by the second voltage detection means.

According to the present invention, when the voltage of the power supply drops due to exhaustion of a battery or the like, this state is indicated on the display to enable a user to recognize the time to replace the battery or charge the power supply. Preferably, this indication on the display is given in such a way that the whole or a part of the display blinks.

Embodiments of the present invention will now be described by way of further example only and with reference to the accompanying drawings, in which:-

A preferred form of the present invention is illustrated in the accompanying drawings in which:
Fig. 1 is a block diagram showing the configuration of an electric power supply device in an embodiment of the present invention with respect to functions;
Fig. 2 is a flowchart showing steps of a power supply process in the electric power supply device in the embodiment of the present invention;
Fig. 3 is a block diagram showing the configuration of a portable communication terminal in an embodiment of the present invention with respect to functions;
Fig. 4 is a flowchart of an operation procedure with voltage detection means in the portable communication terminal in the embodiment of the present invention;
Fig. 5 is a flowchart showing an operation procedure of voltage detection means in the portable communication terminal in the embodiment of the present invention; and
Fig. 6 is a flowchart showing an operation procedure of voltage detection means in the portable communication terminal in the embodiment of the present invention.

A preferred embodiment of an electric power supply device of the present invention will be described in detail with reference to the accompanying drawings.

### (Embodiment 1)

A watch-type communication device provided with an electric power supply device of this embodiment has been developed and improved from a wristwatch in the conventional art. The watch-type communication device is similar in external appearance to a wristwatch, has a liquid crystal display provided in a portion corresponding to the dial, and can indicate the current time, etc., on the screen of the liquid crystal display. The device is capable of opening and closing the display portion by means of a hinge and also capable of performing communication in the same manner as conventional portable telephones by a speaker and a microphone contained therein.

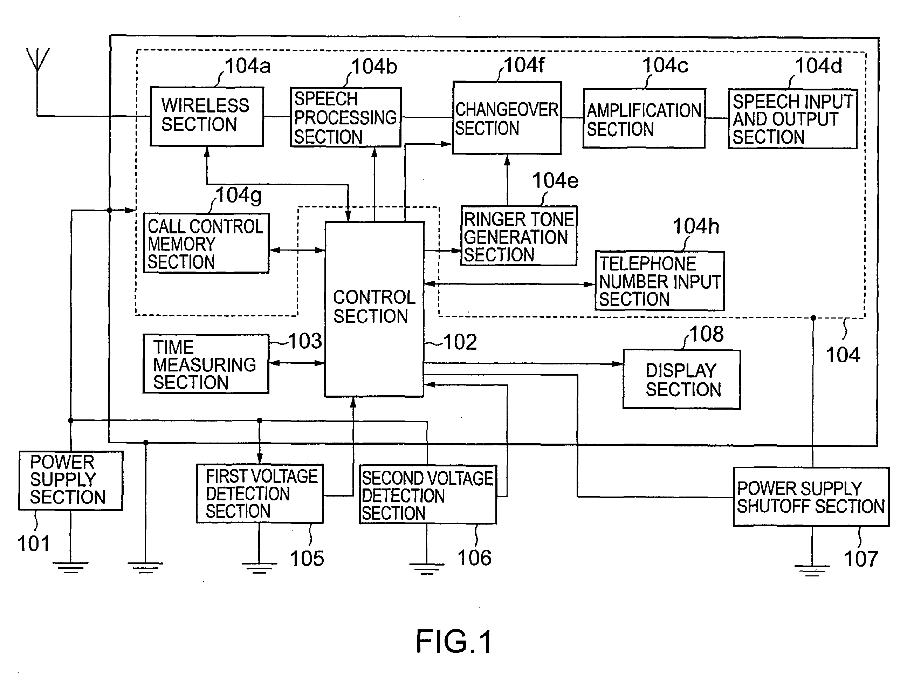

The functional configuration of the electric power supply device in this embodiment of the present invention will next be described. Fig. 1 is a block diagram showing the configuration of the electric power supply device of this embodiment with respect to functions.

Referring to Fig. 1, a block 101 represents a power supply section for supplying electric power to functional sections described below. Specifically, the power supply section 101 is realized by a lithium-ion battery. A control section 102, a time measuring section 103, a communication section 104, a first voltage detection section 105, a second voltage detection section 106, and a display section 108 described below, are connected parallel to the power supply section 101 to be supplied with electric power therefrom.

The control section 102 controls the operation of the entire system, including transmitting and receiving of speech data, measurement and display of the current time, by controlling each functional section described below. Specifically, the control section 102 is realized by a program written in a ROM in advance, a CPU which reads out and executes the program, a RAM used as a work area for the CPU, etc.

The time measuring section 103 measures the current time, the current date, etc., from the oscillation frequency of a quartz crystal, as wristwatches in the conventional art do.

The communication section 104 has the same functions as portable telephones in the conventional art and has, as its constituent subsections, a wireless section 104a, a speech processing section 104b, an amplification section 104c, a speech input and output section 104d, a ringer tone generation section 104e, a changeover section 104f, a call control memory section 104g, and a telephone number input section 104h.

The wireless section 104a transmits and receives various kinds of data such as speech data to and from a base station through an antenna. The speech processing section 104b encodes or decodes a speech signal inputted from the wireless section 104a or the amplification section 104c described below. The amplification section 104c amplifies a signal supplied from the speech processing section 104b or the speech input and output section 104d described below to a predetermined level. The speech input and output section 104d includes a speaker and a microphone and amplifies a ringer tone and received speech and picks up speech from a talker.

The ringer tone generation section 104e generates a ringer tone according to a call from a base station. The changeover section 104f disconnects the amplifier section 104c from the speech processing section 104b and connects it to the ringer tone generation section 104e only when an incoming call is received, thereby enabling a generated ringer tone to be output to the speech input and output section 104d through the amplification section 104c.

The call control memory 104g stores a program relating to call control. The telephone number input section 104h is, specifically, constituted of a number keys 0 to 9 and some other keys and is operated to input a telephone number or the like of the other end of a line.

The first voltage detection section 105 detects a drop in the voltage applied by the power supply section 101 to the control section 102 and other functional sections below a predetermined value, e.g., 3 V set in advance as a minimum requisite voltage for operating the communication section 104 with stability, and notifies the control section 102 of this voltage drop.

The control section 102 notified of this voltage drop breaks the connection between the power supply section 101 and the communication section 104 by controlling a power supply shutoff section 107 described below to stop supply of electric power to the communication section104. Simultaneously, the control section 102 controls the display section 108 to indicate on the display information that the communication section 104 has become unable to operate due to a deficiency of remaining battery energy.

The second voltage detection section 106 also monitors a drop in the voltage applied from the power supply section 101 to each functional section, in the same manner as the first voltage detection section 105. However, a predetermined value set in the second voltage detection section 106 is lower than the lowest necessary voltage for operating the communication section 104 (i.e., the value set in the first voltage detection section 105) and is higher than the lowest necessary voltage for operating the time measuring section 103. For example, the predetermined value set in the second voltage detection section 106 is 2 V.

When the second voltage detection section 106 detects a drop in the supplied voltage below 2 V, the control section 102 notified of this voltage drop controls the display section 108 described below to display a row of letters, an icon or the like on the display in a blinking manner.

When the first voltage detection section 105 detects a voltage drop below the predetermined level, the power supply shutoff section 107 breaks the connection between the power supply section 101 and the communication section 104 to stop supply of electric power to the communication section 104. In this event, the control section 102, the time measuring section 103 and the display section 108 also connected to the power supply section 101 are supplied with electric power without being affected as before because of their parallel connection.

The display section 108 displays the current time measured by the time measuring section 103 and a message informing that the communication section 104 has become unable to operate due to a deficiency of remaining battery energy on the liquid crystal display continuously or by blinking in a cycle of, for example, 2 Hz under the control of the control section 102 having received the detection results from the first voltage detection section 105 and the second voltage detection section 106.

The display of information that the communication section 104 has become unable to operate may be provided in the form of a letter message. Alternatively, it may be provided in a more intuitively recognizable form, for example, by a method of marking a telephone icon on the display with a symbol "x".

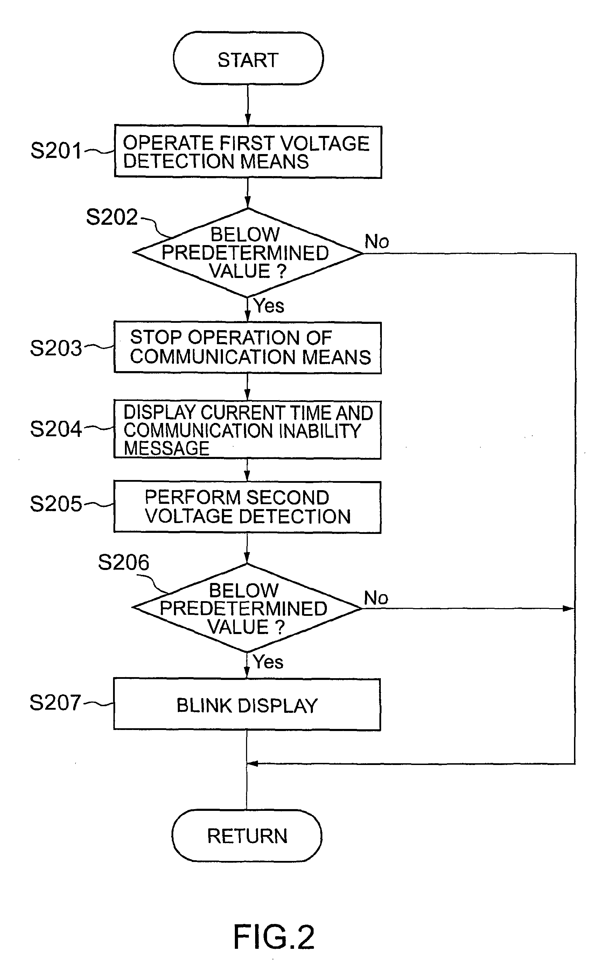

An electric power supply process (electric power supply stoppage process) when the supply voltage becomes lower than the predetermined level due to exhaustion of the battery in the electric power supply device in this embodiment will now be described. Fig. 2 is a flowchart showing steps of the electric power supply process in the electric power supply device in this embodiment.

In step S201, the voltage applied to each functional section connected to the power supply section 101 is detected by the first voltage detection section 105. In step S202, a judgement is made as to whether the value detected in step S201 is lower than the predetermined value, e.g., 3 V set in advance as a lowest necessary value for operating the communication section 104 with stability.

If the detected voltage is not lower than 3 V (The answer is No in step S202), the obtained voltage is high enough to operate the communication section 104 with no problem and thus the supply of electric power to the communication section 104 is continued without being changed.

If the detected voltage is lower than 3 V (The answer is Yes in step S202), the power supply section 101 and the communication section 104 are disconnected in step S203 to stop supply of electric power to the communication section 104. Then, in step S204, information that the communication section 104 has become unable to operate due to exhaustion of the battery is displayed on the display together with the current time, etc., already indicated.

Further, in step S205, the voltage supplied to each functional section is detected by the second voltage detection section 106, as in step S201. In step S206, a judgement is made as to whether the detected voltage is lower than the predetermined value, e.g., 2 V set arbitrarily in the range below the voltage for operating the communication section 104 and above the voltage for operating the time measuring section 103.

If the detected voltage is not lower than 2 V (The answer is No in step S206), the obtained voltage is high enough to operate the time measuring section 103 with no problem though not high enough to operate the communication section 104, and thus supply of electric power to the sections other than the communication section 104 is continued.

If the detected voltage is lower than 2 V (The answer is Yes in step S206), the obtained voltage has come to be closer to the lowest necessary voltage for operating the time measuring section 103, and thus the current time, a communication-inability message, etc., on the display are displayed in a blinking manner in step S207 to warn about the state of the voltage and to reduce the electric power consumption.

Thus, in the phase of gradual reduction in the supply voltage with exhaustion of the battery, when the voltage drops to, for example, 3.0 V, supply of electric power to all the functional sections is continued through steps S201 and S202.

When the voltage drops further to 2.9 V, supply of electric power to the communication section 104 is stopped and the communication-inability message is displayed together with the current time, etc., on the display as a result of steps S201 to S206.

When the voltage drops further to reach 1.9 V, the current time and the communication-inability message on the display are displayed in a blinking manner as a result of steps S201 to S207, and this state continues until the time measuring section 103 becomes unable to operate.

In this embodiment, as described above, even after the battery has been exhausted to such an extent that the lowest necessary voltage for operating the communication section 104 cannot be obtained, the small amount of remaining energy is utilized to operate the time measuring section 103 and the display section 108 as long as possible. In other words, even after the end of the life of the battery as a power supply for the communication device, the watch type communication device incorporating the power supply device in accordance with the present invention can be continuously used at least as a watch.

The power supply device in accordance with the present invention is designed such that in a device containing a plurality of functional sections differing largely in power consumption from each other (each functional section can also be regarded as one device), remaining small electric power when the battery is exhausted can be efficiently used by exclusively stopping supply of electric power to a section having a larger electric power consumption. Therefore, electric power can be supplied to any devices or sections varying in electric power consumption as well as the time measuring section and the communication section of the wristwatch-type communication device described above.

### (Embodiment 2)

A preferred embodiment of a portable information device of the present invention will be described in detail.

First, it is to be noted that a portable information device in this embodiment has been developed as an improvement over a wristwatch in the conventional art. The portable information device is similar in external appearance to a wristwatch, has a liquid crystal display provided in a portion corresponding to the dial, and can display the current time, etc., on the screen of the liquid crystal display. When the device is used as a communication device, it is taken off from the wrist and is used to perform communication in the same manner as conventional portable telephones by a speaker and a microphone contained inside a band portion.

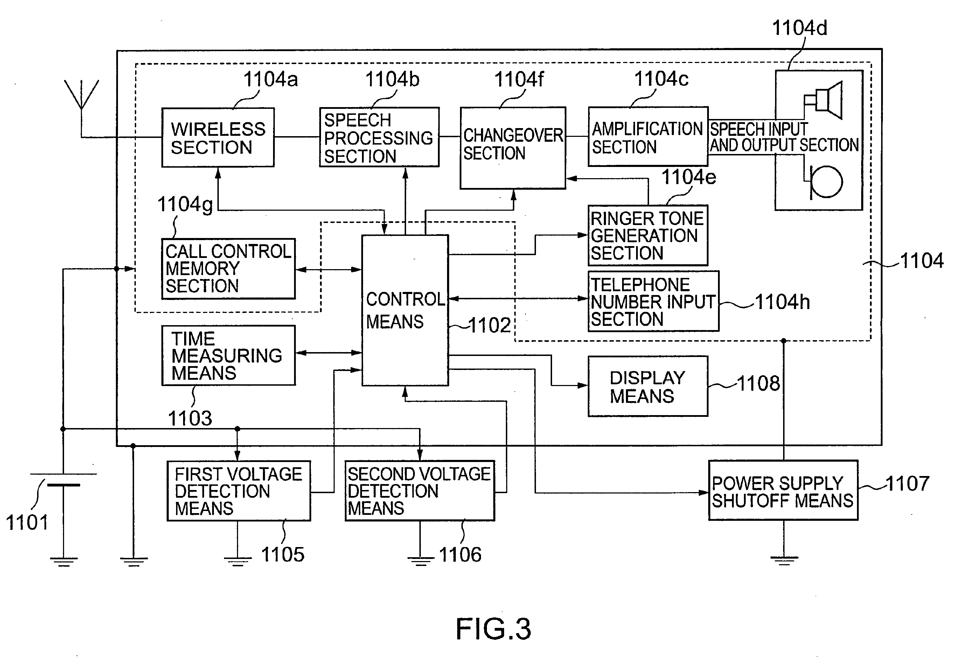

The functional configuration of the portable information device in this embodiment of the present invention will next be described. Fig. 3 is a block diagram showing the configuration of the portable information device of this embodiment with respect to functions.

Referring to Fig. 3, a block 1101 represents a power supply section for supplying electric power to functional sections described below. Specifically, the power supply section 1101 is realized by a lithium-ion secondary battery. A control means 1102, a time measuring means 1103, a communication means 1104, a first voltage detection means 1105, a second voltage detection means 1106, and a display means 1108, described below, are connected parallel to the power supply section 1101 to be supplied with electric power therefrom.

The control means 1102 controls the operation of the entire system, including transmitting and receiving of speech data, measurement and display of the current time, by controlling the functional sections described below. Specifically, the control means 1102 is realized by a program written in a ROM in advance, a CPU which reads out and executes the program, a RAM used as a work area for the CPU, etc.

The time measuring means 1103 measures the current time, the current date, etc., from the oscillation frequency of a quartz crystal, as wristwatches in the conventional art do.

The communication means 1104 has the same functions as portable communication devices in the conventional art and has, as its constituent sections, a wireless section 1104a, a speech processing section 1104b, an amplification section 1104c, a speech input and output section 1104d, a ringer tone generation section 1104e, a changeover section 1104f, a call control memory section 1104g, and a telephone number input section 1104h.

The wireless section 1104a transmits and receives various kinds of data such as speech data to and from a base station through an antenna. The speech processing section 1104b encodes or decodes a speech signal inputted from the wireless section 1104a or the amplification section 1104c described below. The amplification section 1104c amplifies a signal inputted from the speech processing section 1104b or the speech input and output section 1104d described below to a predetermined level. Specifically, the speech input and output section 1104d includes a speaker and a microphone and amplifies a ringer tone and received speech and picks up speech from a talker.

The ringer tone generation section 1104e generates a ringer tone according to a call from a base station. The changeover section 1104f disconnects the amplifier section 104c from the speech processing section 1104b and connects it to the ringer tone generation section 1104e only when an incoming call is received, thereby enabling a generated ringer tone to be output to the speech input and output section 1104d through the amplification section 1104c.

The call control memory 1104g stores a program relating to outgoing and incoming call control. The telephone number input section 1104h is, specifically, constituted of number keys 0 to 9 and some other keys and is operated to input a telephone number and the like of the other end of a line.

The first voltage detection means 1105 detects a drop in the voltage applied by the power supply means 1101 to the control means 1102 and each functional section below a predetermined value, e.g., 3 V set in advance as a minimum requisite voltage for operating the communication means 1104 with stability, and notifies the control means 1102 of this voltage drop.

The control means 1102 notified of this voltage drop inhibits the wireless section 1104a, the speech processing section 1104b, the changeover section 1104f and the ringer tone generation section 1104e from operating. In particular, stoppage of the operation of the wireless section 1104a having a large electric power consumption is indispensable. Simultaneously, information that the communication means 1104 has become unable to operate due to a deficiency of remaining battery energy is displayed on the display means 1108.

The second voltage detection means 1106 also monitors a drop in the voltage applied from the power supply section 1101 to each functional section, like the first voltage detection means 1105. However, a predetermined value set in the second voltage detection means 1106 is lower than the lowest necessary voltage for operating the communication means 1104 (i.e., the value set in the first voltage detection means 1105) and is higher than the lowest necessary voltage for operating the time measuring means 1103. For example, the predetermined value set in the second voltage detection means 1106 is 2 V.

When the second voltage detection means 1106 detects a drop in the supplied voltage below 2 V, the control means 1102 notified of this voltage drop controls the display means 1108 described below to display a row of letters, an icon or the like on the display means 1108 in a blinking manner.

As described above, the voltage detection means 1105, 1106, and the control means 1102 operate to inhibit the operation of the communication means 1104, and information that the operation of the communication means 1104 is inhibited can be displayed on the display means 1108.

In this embodiment, the power shutoff means 1107 capable of selectively shutting off the power supply with respect to the sections relating to the functions of the communication means is provided to stop the functions of the communication section more completely.

The display of information that the communication means 1104 has become unable to operate may be provided in the form of a letter message. Alternatively, it may be provided in a more intuitively recognizable form, for example, by a method of marking a telephone icon on the display means 1108 with a symbol "x".

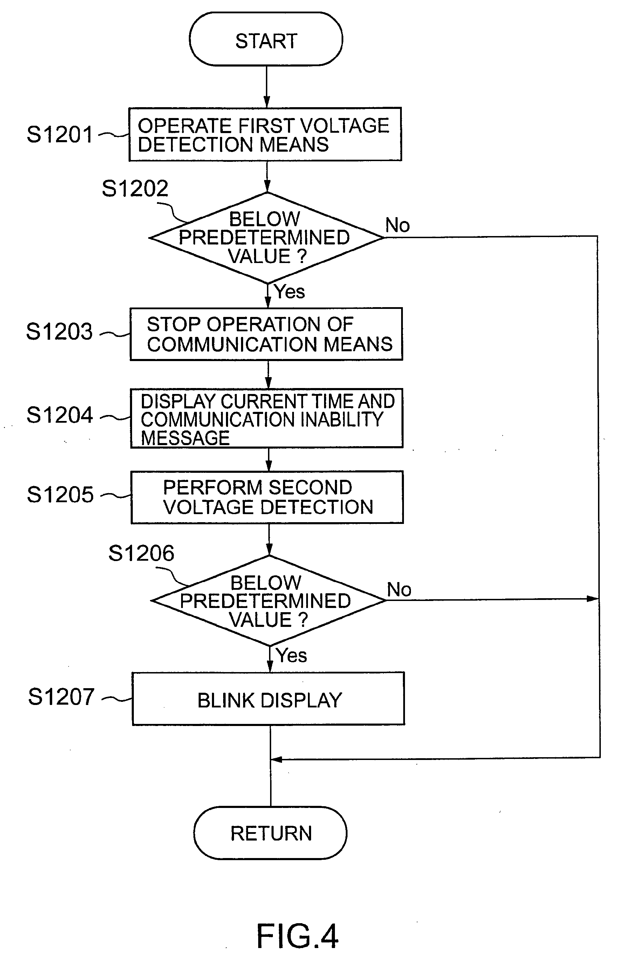

Next, the operation of the portable information device in this embodiment when the supply voltage becomes lower than the predetermined level due to exhaustion of the battery will be described. Fig. 4 is a flowchart showing an operation procedure in the portable information device in this embodiment.

In step S1201, the voltage applied to each functional section connected to the power supply section 1101 is detected by the first voltage detection means 1105. In step S1202, a judgement is made as to whether the value detected in step S1201 is lower than the predetermined value, e.g., 3 V set in advance as a lowest necessary value for operating the communication means 1104 with stability.

If the detected voltage is not lower than 3 V (The answer is No in step S1202), the obtained voltage is high enough to operate the communication means 1104 with no problem, and thus the supply of electric power to the communication means 1104 is continued without being changed and this operation flow is terminated.

If the detected voltage is lower than 3 V (The answer is Yes in step S1202), the control means 1102 stops the functions of the wireless section 1104a and other functions relating to communication. Also, the communication means 1104 is disconnected from the power supply section 1101 to stop supply of electric power to the communication means 1104. Then, in a following step S1204, information that the communication means 1104 has become unable to operate due to exhaustion of the battery is displayed on the display means 1108 together with the current time, etc., already displayed.

Further, in step S1205, the voltage supplied to each functional section is detected by the second voltage detection means 1106 as in step S1201. In step S1206, a judgement is made as to whether the detected voltage is lower than the predetermined value, e.g., 2 V set arbitrarily in the range below the voltage for operating the communication means 1104 and above the voltage for operating the time measuring means 1103.

If the detected voltage is not lower than 2 V (The answer is No in step S1206), the obtained voltage is high enough to operate the time measuring section 1103 with no problem though not enough to operate the communication section 1104, and thus the operation of the communication section 1104 is kept inhibited, but the time measuring section 1103 continues the operation of measuring time, and this operation flow is terminated.

If the detected voltage has come to be lower than 2 V (Yes in step S1206), the obtained voltage is closer to the lowest necessary voltage for operating the time measuring means 1103, and thus the current time, a communication-inability message, etc., on the display are displayed in a blinking manner in step S1207 for the purpose of warning about the state of the voltage, and this operation flow is terminated.

Thus, in the phase of gradual reduction in the supply voltage with exhaustion of the battery, when the voltage drops to, for example, 3.0 V, supply of electric power to all the functional sections is continued through steps S1201 and S1202.

When the voltage drops further to 2.9 V, the operation of the communication means 1104 is stopped and the communication-inability message is displayed together with the current time, etc., on the display means 1108 through process steps S1201 to S1206. When the voltage drops further to reach 1.9 V, the current time and the communication-inability message on the display means 1108 are displayed in a blinking manner through process steps S1201 to S1207, and this state continues until the time measuring means 1103 becomes unable to operate.

### (Embodiment 3)

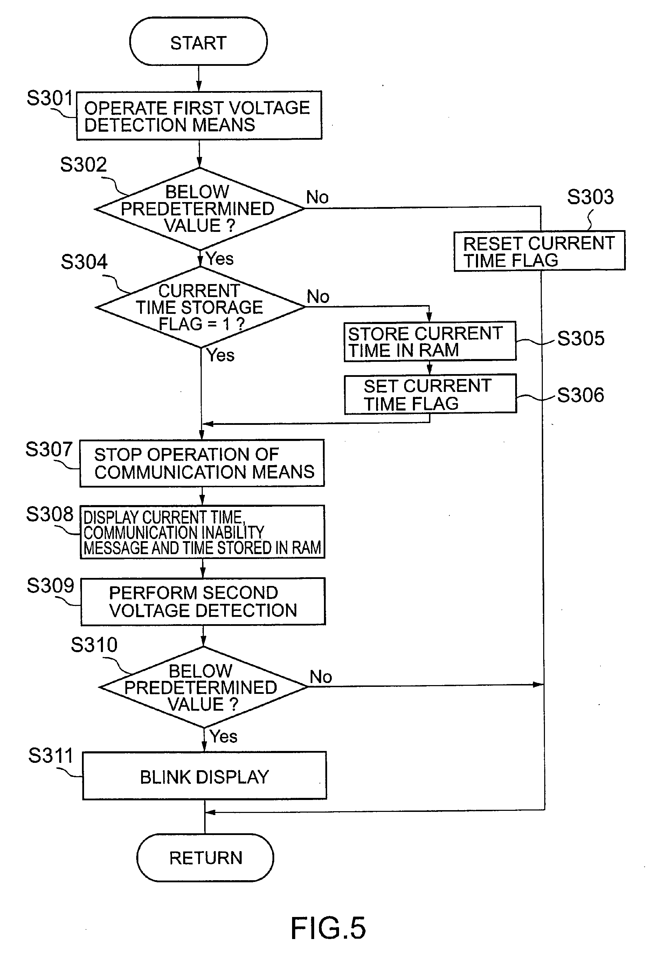

The operation in another embodiment with respect to a situation where the supply voltage in the portable information device in the above-described embodiment becomes lower than a predetermined level due to exhaustion of the battery will next be described. Fig. 5 is a flowchart showing an operation procedure in the portable information device in this embodiment.

In step S301, the voltage applied to each functional section by the power supply section 1101 is detected by the first voltage detection means 1105. In step S302, a judgement is made as to whether the value detected in step S301 is lower than the predetermined value, e.g., 3 V set in advance as a lowest necessary value for operating the communication means 1104 with stability.

If the detected voltage is not lower than 3 V (The answer is No in step S302), the obtained voltage is high enough to operate the communication means 1104 with no problem. In step S303, therefore, a current time flag is reset, which is set when information on the time at which the operation of the communication means is stopped is stored in the RAM, and this operation flow is terminated.

If the detected voltage is lower than 3 V (The answer is Yes in step S302), a judgement is made in step S304 as to whether a present time storage flag is set. If the present time storage flag is in the reset state (The answer is No in step 304), another drop in the power supply voltage has been detected by the first voltage detection means 1105. In step S305, therefore, the control means 1102 reads out the current time from the time measuring means 1103 and stores the current time in the RAM. After storing the current time in the RAM, the control means 1102 sets the current time flag in step S306.

If the current time storage flag is set (The answer is Yes in step 304), a drop in the power supply voltage has already been detected once by the first voltage detection means 1105. Therefore the operation of the communication means is stopped in step S307. Subsequently, in step S308, information that the communication means 1104 has become unable to operate due to exhaustion of the battery, the current time and the time at which the communication means 1104 became unable to operate and which has been stored in the RAM are displayed together.

Further, in step S309, the voltage supplied to each functional section is detected by the second voltage detection means 1106 as in step S301. In step S310, a judgement is made as to whether the detected voltage is lower than a predetermined value, e.g., 2 V set arbitrarily in the range below the voltage for operating the communication means 1104 and above the voltage for operating the time measuring means 1103.

If the detected voltage is not lower than 2 V (The answer is No in step S310), the obtained voltage is high enough to operate the time measuring means 1103 with no problem though not enough to operate the communication means 1104, and thus this operation flow is terminated while the operation of the communication means 1104 is inhibited.

If the detected voltage is lower than 2 V (The answer is Yes in step S310), the obtained voltage has come to be closer to the lowest necessary voltage for operating the time measuring means 1103, and thus blinking display of the entire display contents on the display is started in step S311 for the purpose of warning the user of the state of the voltage, and this operation flow is terminated.

### (Embodiment 4)

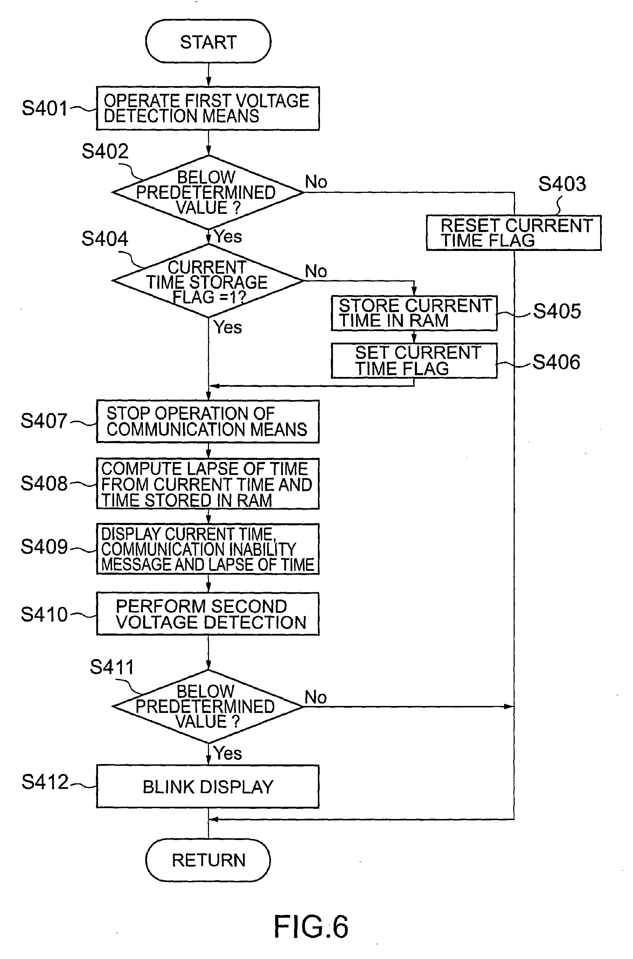

The operation in still another embodiment with respect to a situation where the supply voltage in the portable information device in the above-described embodiment becomes lower than a predetermined level due to exhaustion of the battery will be described. Fig. 6 is a flowchart showing an operation procedure in the portable information device in this embodiment.

In the description of the operation with reference to Fig. 6, the same operations as those in the description of the operation with reference to Fig. 5 will not be described and only a description relating to means newly added will be given. In the embodiment shown in Fig. 6, a lapse of time from a time point at which the first voltage detection means 1105 detects a voltage at which the communication means 1104 cannot operate can be displayed on the display means 1108.

To enable this, the process shown in Fig. 6 comprises step 408 as a new process in addition to the process shown in Fig. 5. In step S408, the difference between time data stored in the RAM and the current time obtained from the time measuring means 1103 is computed. The lapse of time obtained by this computation is displayed in step S409 together with the current time and information that communication cannot be performed. With respect to other details, the operation is the same as that described above with reference to Fig. 5. Therefore a further description of this embodiment will not be made.

In this embodiment, as described above, even after the battery has been exhausted to such an extent that the lowest necessary voltage for operating the communication means 1104 cannot be obtained, the small amount of remaining energy is utilized to operate the time measuring means 1103 and the display means 1108 as long as possible. In other words, even at the end of the life of the battery as a power supply for the communication device, the potable information device in accordance with the present invention can be continuously used at least as a watch.

The portable communication device in accordance with the present invention is designed so that in a device incorporating a plurality of functional sections differing largely in electric power consumption from each other (each functional section can also be regarded as one device), remaining small amount of electric power when the battery is exhausted can be efficiently used by exclusively stopping the operation of a section having a larger electric power consumption. Therefore, the present invention can be applied to any devices or sections varying in electric power consumption as well as the time measuring section and the communication section of the wristwatch-type communication device described above.

According to the present invention, as described above, in the electric power supply device for supplying electric power to a time measuring device for measuring the current time, etc., and to a communication device for transmitting and receiving speech data, etc., to and from other communication device or the like, the voltage detection means detects a drop below a predetermined value in the voltage applied to the time measuring device and the communication device; the power supply stop means stops supply of electric power to the communication device when a drop below the predetermined value in the voltage applied to the time measuring device and the communication device is detected by the voltage detection means; and the display means displays on a display the current time, etc., measured by the time measuring device and information that the communication device has become unable to operate when a drop below the predetermined value in the voltage applied to the time measuring device and the communication device is detected by the voltage detection means. When the voltage of the power supply drops due to exhaustion of a battery or the like, only supply of electric power to the communication device having a larger electric power consumption is exclusively stopped and remaining electric power is supplied to and consumed by the time measuring device having a smaller electric power consumption. Thus, the present invention can provide an electric power supply device capable of efficiently utilizing a small amount of remaining electric power and extending the drive time of the connected device as a whole.

According to the present invention, the above-described arrangement of the present invention is further provided with second voltage detection means for detecting a drop below another predetermined value in the voltage applied to the time measuring device and the communication device, and the display means displays on the display the current time, etc., measured by the time measuring device and information that the communication device is unable to operate when a drop below each of the predetermined values in the voltage applied to the time measuring device and the communication device is detected by the second voltage detection means. Thus, the present invention can provide an electric power supply device capable of informing a user of a battery life stage in which the remaining energy in the battery is close to zero and also capable of extending the drive time of the connected device as a whole. Further, it is possible to make the user to be more aware of the time to replace the power source or charge the power supply through blinking of the entire or a part of the display.

According to the present invention, it is also possible to provide, in a portable information device having functions requiring amounts of operating power which differs greatly, e.g., a time measuring function for measuring the current time, etc., and a communication function for transmitting and receiving speech data or the like to and from another communication device or the like, a portable communication terminal capable of extending the drive time of the device as a whole by selectively stopping each function when a drop below a predetermined value in the voltage applied to the time measuring device and the communication device is detected by the voltage detection means.

According to the present invention described above, it is also possible to display a time at which the communication device becomes unable to operate or a lapse of time from the time at which the communication device has become unable to operate. Thus, the user can be supplied with new significant information. Further, the second voltage detection means is provided to detect a drop below another predetermined value in the voltage applied to the time measuring device and the communication device, and the display means displays on the display the current time, etc., measured by the time measuring device and information that the communication device is unable to operate when a drop below each of the predetermined values in the voltage applied to the time measuring device and the communication device is detected by the second voltage detection means, thus enabling the user to know the battery life stage in which the remaining energy in the battery is close to zero as well as extending the drive time of the connected device as a whole. Further, it is possible to enable the user to be more aware of the time to replace or charge the power supply through blinking of the entire or a part of the display.

## Claims

1. An electric power supply device comprising:
a time measuring device for measuring a current time;
a communication device for transmitting and receiving data to and from another communication device;
voltage detection means for detecting a drop below a predetermined value in a voltage applied to the time measuring device and the communication device;
power supply stop means for stopping supply of electric power to the communication device when a drop below the predetermined value in the voltage applied to the time measuring device and the communication device is detected by the voltage detection means; and
display means for displaying on a display the current time measured by the time measuring device and information that the communication device has become unable to operate when a drop below the predetermined value in the voltage applied to the time measuring device and the communication device is detected by the voltage detection means.

2. An electric power supply device according to Claim 1, further comprising second voltage detection means for detecting a drop below another predetermined value in the voltage applied to the time measuring device and the communication device,
wherein the display means displays on the display the current time measured by the time measuring device and information that the communication device is unable to operate when a drop below each of the predetermined values in the voltage applied to the time measuring device and the communication device is detected by the second voltage detection means.

3. A portable electronic device comprising:
communication means for transmitting and receiving data;
first voltage detection means for ascertaining whether a voltage applied to the communication means is lower than a predetermined voltage value for driving the communication means;
time measuring means for measuring time with a drive voltage lower than that of the communication means;
second voltage detection means for ascertaining whether a voltage applied to the time measuring means is lower than the predetermined voltage value for driving the time measuring means;
a power supply for supplying electric power at least to the communication means and the time measuring means;
control means for stopping the communication means when the voltage of the power supply is lower than the predetermined voltage value of the first voltage detection means and equal to or higher than the predetermined voltage value of the second voltage detection means; and
display means for displaying on a display information that the communication means is stopped and the current time measured by the time measuring means when the voltage of the power supply is lower than the predetermined voltage value of the first voltage detection means and equal to or higher than the predetermined voltage value of the second voltage detection means.

4. A portable electronic device according to Claim 3, wherein the control means stores the time at which the communication means is stopped, and the display means displays the time at which the communication means is stopped and which is stored in the control means, as well as the information that the communication means is stopped and the current time.

5. A portable electronic device according to Claim 3, wherein the control means computes a lapse of time from the time at which the communication means is stopped, and
wherein the display means displays the lapse of time computed by the control means as well as the information of the stoppage and the current time.

6. A portable information device according to Claim 3, wherein the display means displays information that the time measuring means will stop in a certain time period when the voltage of the power supply is at a voltage value lower than the predetermined voltage value of the second voltage detection means.

7. A portable information device according to Claim 4, wherein the display means displays information that the time measuring means will stop in a certain time period when the voltage of the power supply is at a voltage value lower than the predetermined voltage value of the second voltage detection means.

8. A portable information device according to Claim 5, wherein the display means displays information that the time measuring means will stop in a certain time period when the voltage of the power supply is at a voltage value lower than the predetermined voltage value of the second voltage detection means.
